# FASCICULE DE BREVET EUROPEEN

(11) **EP 1 901 929 B1**
(45) Date de publication et mention de la délivrance du brevet: **12.08.2009**
(21) Numéro de dépôt: 06764011.0
(22) Date de dépôt: 30.06.2006
(51) Int. Cl.: B60C 11/04, B60C 11/12

(54) **BANDE DE ROULEMENT COMPORTANT UNE SCULPTURE AVEC DES INCISIONS**
LAUFFLÄCHE MIT EINEM PROFILMUSTER MIT EINSCHNITTEN
TREAD COMPRISING A TREAD PATTERN WITH SIPES

(30) Priorité: 05.07.2005 FR 0507179
(43) Date de publication de la demande: 26.03.2008
(73) Titulaire: Société de Technologie Michelin, 63000 Clermont-Ferrand (FR); Michelin Recherche et Technique S.A., 1763 Granges-Paccot (CH)
(72) Inventeur: THIEBAUD, Philippe, F-63110 Beaumont (FR)
(74) Mandataire: Diernaz, Christian
(86) Numéro de dépôt international: PCT/EP2006/063764
(87) Numéro de publication internationale: WO 2007/003610

(56) Documents cités:
- EP-A- 0 823 340
- EP-A- 0 829 381
- PATENT ABSTRACTS OF JAPAN vol. 010, no. 211 (M-501), 24 juillet 1986 (1986-07-24) -& JP 61 050805 A (SUMITOMO RUBBER IND LTD), 13 mars 1986 (1986-03-13)

## Description

L'invention concerne le domaine des bandes de roulement notamment pour pneumatique de véhicules poids lourd et plus particulièrement les sculptures de ces bandes, comme celle décrite par EP-A-0 829 381.

Pour conférer aux pneumatiques des performances satisfaisantes en adhérence sur chaussées mouillées, il est connu de pourvoir chaque bande de roulement avec une sculpture formée de nervures d'orientation générale circonférentielle ou longitudinale (c'est-à-dire pouvant être en zigzag autour de cette direction) et à pourvoir ces nervures avec une pluralité d'incisions de faible largeur comparée à la largeur des rainures (en règle générale, la largeur moyenne des incisions est au maximum 2 mm); ces incisions sont en général d'orientation transversale, c'est-à-dire que la direction faite par une droite passant par les points d'extrémité de ces incisions fait un angle différent de 0° avec la direction circonférentielle (en général supérieur à 40°). Chaque incision transversale peut s'étendre sur une partie seulement ou sur la totalité de l'épaisseur utile de la bande de roulement (par définition, l'épaisseur utile d'une bande correspond à l'épaisseur de bande de roulement qu'il est possible d'user tout en restant dans les prescriptions légales en vigueur). Bien entendu, les performances obtenues sont également liées à la nature des matériaux choisis pour une bande de roulement : l'application à des pneumatiques pour véhicules poids lourd, impose notamment des matériaux présentant des performances en usure compatibles avec les distances de roulage visées.

Toutefois, les bandes de roulement usuelles pour pneumatique de véhicules poids lourd comportant de nombreuses incisions laissent apparaître plus ou moins vite à l'usage des usures localisées au voisinage des arêtes desdites incisions. Par usures localisées, il faut entendre ici que l'usure n'affecte pas de manière uniforme l'ensemble de la surface de roulement de la bande de roulement mais qu'il existe sur certaines parties de ladite surface de roulement des usures plus prononcées.

Si de telles usures ne sont pas préjudiciables sur le plan des performances en roulage, il n'en demeure pas moins que l'on peut atteinre plus rapidement le moment où il faut soit changer de pneumatique soit renouveler la bande de roulement.

Ces usures sont liées pour une part à une diminution de rigidité de la bande de roulement, cette diminution de rigidité étant en partie liée à la possibilité qu'ont les faces de matière en vis-à-vis délimitant chaque incision de glisser les unes par rapport aux autres lors du passage dans le contact avec la chaussée.

Il a été proposé, notamment dans le brevet EP 768958 B1, de prévoir des moyens de blocage des mouvements relatifs des faces de matière délimitant chaque incision. Une réalisation de tels moyens de blocage consiste à pourvoir les faces avec une pluralité d'ondulations s'engrenant les unes avec les autres, ces ondulations s'étendant dans au moins une direction. Pour limiter voire bloquer les mouvements relatifs entre deux faces délimitant une incision dans la direction de l'épaisseur de la bande (c'est-à-dire dans une direction sensiblement radiale lorsque la bande équipe un pneumatique), on réalise des ondulations dans la direction perpendiculaire à ladite direction.

Il a toutefois été constaté que la performance en usure pouvait encore être améliorée tout en conservant une excellente performance en adhérence.

Le besoin existe d'une sculpture de bande de roulement pour pneumatique formée essentiellement de nervures circonférentielles pourvues d'une pluralité d'incisions, de largeur moyenne inférieure à 2 mm, créant un grand nombre d'arêtes et une grande longueur d'arêtes, ces incisions délimitant une pluralité d'éléments de gomme dont les parois en vis-à-vis se bloquent mutuellement l'une l'autre avec une efficacité quasiment instantanée (c'est-à-dire avec un retard très sensiblement réduit voire nul) et ne générant pas d'usure localisée (dite "usure irrégulière").

A cet effet, l'invention propose une bande de roulement pour pneumatique comportant une sculpture comprenant :au moins une nervure longitudinale délimitée par des rainures ayant même orientation, chaque nervure comprenant une pluralité d'incisions d'orientation essentiellement transversale et débouchant dans les rainures délimitant ladite nervure, sur chaque nervure, chaque incision, délimitée par des faces de matière se faisant face, comprend au moins trois parties, deux au moins de ces parties sont d'orientation essentiellement transversale (c'est-à-dire au moins égal à 60° avec la direction longitudinale de la bande) et débouchent dans les rainures délimitant la nervure longitudinale et forment les parties d'extrémité de l'incision, au moins une troisième partie étant orientée essentiellement dans la direction longitudinale (c'est-à-dire dont la trace sur la surface de roulement fait un angle moyen au plus égal à 10° avec la direction longitudinale).

Les parties de l'incision comprennent sur les faces de matière qui les délimitent des moyens pour limiter l'amplitude des mouvements d'une de ces faces par rapport à l'autre au moins dans la direction de l'épaisseur de la bande. Cette bande est
**caractérisée en ce que** toutes les parties de l'incision d'orientation essentiellement longitudinale sont totalement dépourvues de tout moyen de blocage des faces, que ce soit dans la direction de l'épaisseur de la bande ou dans une direction transversale à l'épaisseur de la bande et en ce que chaque partie d'orientation générale transversale est en totalité décalée dans le sens longitudinal de toute autre partie d'orientation transversale de la même incision.

La direction longitudinale d'une bande de roulement correspond à la direction circonférentielle une fois un pneumatique équipé d'une telle bande. La direction transversale de la bande correspond à une direction perpendiculaire à la direction longitudinale et à la direction de l'épaisseur de la bande.

Une partie d'orientation générale transversale est dite en "totalité décalée" dans le sens longitudinal de toute autre partie d'orientation transversale de la même incision dès lors que tous les points de ladite partie sont d'un même côté par rapport à un plan perpendiculaire à la direction longitudinale et tous les points de l'autre parties d'orientation générale transversale sont de l'autre côté de ce même plan.

Pour obtenir le résultat recherché, il est essentiel d'avoir la combinaison énoncée plus haut, à savoir que toutes les parties d'orientation générale transversale soient pourvues de moyens limitant les mouvements relatifs des faces de matière les délimitant au moins dans la direction de l'épaisseur de la bande et qu'il existe entre chacune desdites parties d'orientation générale transversale des parties d'incision sans aucune limitation des mouvements relatifs. Ainsi, à la sortie du contact avec la chaussée, une première partie d'incision d'orientation générale transversale va se trouvée libérée dudit contact sans entraîner les autres parties d'incision de même orientation générale transversale, ceci
grâce à la présence des parties d'orientation générale longitudinale sans blocage ni limitation des mouvements relatifs. Ces parties d'orientation générale longitudinale jouent en fait un rôle de découplage.

De manière avantageuse, il est préconisé de pourvoir au moins certaines des parties d'incisions d'orientation essentiellement transversale avec des moyens pour limiter les mouvements relatifs dans la direction transversale des faces en vis-à-vis délimitant l'incision.

Les moyens de limitation de l'amplitude des mouvements relatifs d'une face par rapport à la face en vis-à-vis dans une direction peuvent être choisis parmi les variantes suivantes :
- au moins une ondulation dans la direction selon laquelle on cherche à réduire les mouvements,
- au moins un relief sur une face coopérant avec au moins un relief sur la face en vis-à-vis (ces reliefs pouvant être des cavités et des saillies).
- au moins un élément de gomme liant les deux faces opposées d'une même incision transversale (comme décrit notamment dans le brevet EP1007378 B1).

Les reliefs (saillies et cavités) peuvent avoir des formes géométriques quelconques, toutefois, il est préférable que ces formes soient semblables de manière à permettre une coopération plus efficace encore. Il est bien sur possible de former uniquement des saillies sur une paroi délimitant une incision et de former uniquement des cavités complémentaires des saillies sur la paroi opposée.

D'autres caractéristiques et avantages de l'invention ressortent de la description faite ci-après en référence aux dessins annexés qui montrent, à titre d'exemples non limitatifs, des formes de réalisation de l'objet de l'invention.

Sur ces dessins :

La figure 1 est, selon une première variante, une vue en plan d'une sculpture d'une bande de roulement d'un pneumatique selon l'invention ;
La figure 2 montre une vue de la trace sur la surface de roulement d'une incision formée sur la sculpture de la figure 1 ;
La figure 3 montre une lamelle équipant un moule pour mouler l'incision montrée à la figure 2 ;
La figure 4 montre une vue partielle d'une nervure de bande de roulement pourvue d'une pluralité d'incisions selon invention ;
La figure 5 montre une variante de lamelle moulant une incision selon l'invention.

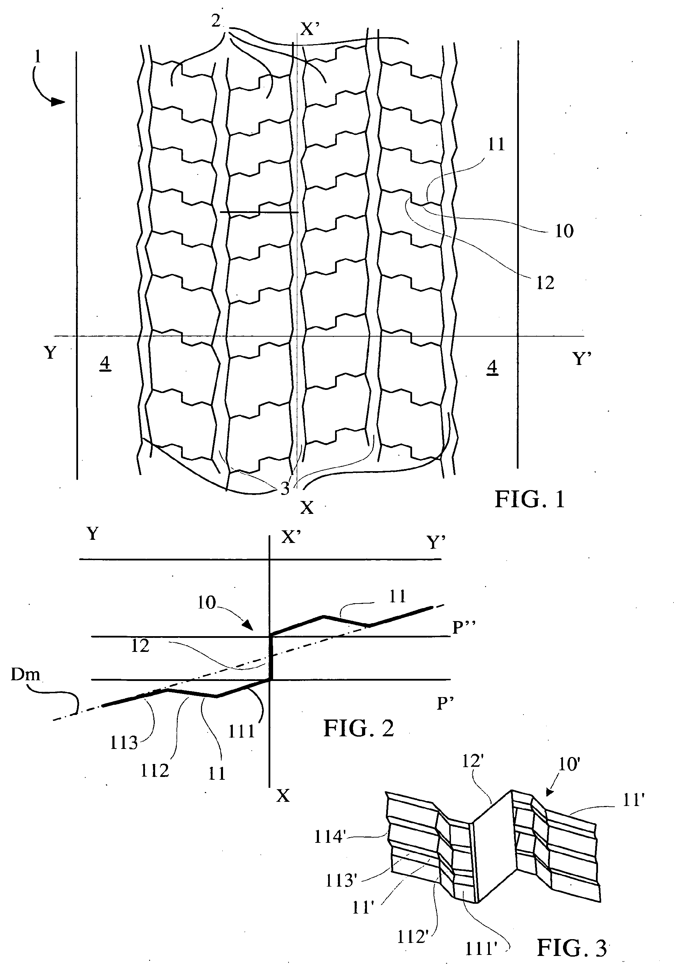

La figure 1 montre une vue partielle d'une sculpture de bande de roulement 1 selon l'invention pour un pneumatique de véhicule poids lourd de dimension 11 R 22.5.

Cette sculpture comprend cinq rainures 3 d'orientation générale circonférentielle délimitant six nervures circonférentielles 2, 4 dont deux forment les bords 4 de la bande. Sur chaque nervure, à l'exception des nervures formant les bords, il est prévu une pluralité d'incisions 10 d'orientation générale transversale et faisant en moyenne avec la direction longitudinale (repérée par la direction XX' sur le dessin) un angle en valeur absolu égal à 70°. Sur certaines des nervures cet angle a un signe positif et sur les autres un signe négatif.

Les rainures ont pour largeur moyenne 6 mm et ont pour profondeur 16 mm.

Les incisions ont pour largeur moyenne 0.6 mm et ont la même profondeur que les rainures.

Chaque incision 10 est formée de plusieurs portions d'incisions : une portion centrale 12 d'orientation longitudinale encadrée de chaque côté par une portion d'orientation générale transversale 11. Les portions d'orientation générale transversale 11 comportent sur les faces de matière les délimitant une pluralité de zigzags dans la direction de la profondeur (c'est-à-dire dans l'épaisseur de la bande) comme cela est visible sur la figure 3 montrant en coupe une lamelle destinée au moulage d'une telle incision.

Sur la figure 2 montrant la trace de l'incision 10 sur la surface de roulement de la bande de roulement, on distingue qu'outre les zigzags dans la direction de la profondeur chaque partie d'orientation générale transversale comporte des zigzags dans la direction transversale 111, 112, 113.

L'orientation moyenne de l'incision 10 est donnée par l'angle que fait la droite Dm passant par les extrémités de l'incision sur les bords de la nervure 2 dans laquelle cette incision est moulée.

Selon cette disposition, la rigidité de la bande de roulement même fortement incisée est maintenue à un niveau approprié lors du passage dans le contact avec le sol, grâce aux blocages mécaniques réalisés par les zigzags présents dans les directions de l'épaisseur et transversale. En outre, au cours du roulage, une première partie d'orientation générale transversale sort de la région de contact avec le sol sans que la deuxième partie d'orientation générale transversale en soit affectée, la région intermédiaire d'orientation longitudinale dépourvue de moyen de blocage des mouvements relatifs entre les faces délimitant cette partie, jouant le rôle de moyen de découplage entre lesdites parties d'orientation générale transversale.

Pour obtenir un découplage optimal entre la région intermédiaire d'orientation générale longitudinale et les parties d'orientation générale transversale, il est préférable que les parties d'orientation transversale soient situées en totalité en dehors du volume délimité par les deux plans P' et P'' parallèles à la direction axiale YY' de la bande de roulement et perpendiculaires à la surface externe de la bande de roulement (correspondant à la surface de roulement) et passant respectivement par les extrémités longitudinalement les plus éloignées de la région intermédiaire (tel que montré à la figure 2).

La figure 3 montre une lame 10' pour équiper un moule de bande de roulement. Cette lame comprend deux parties d'extrémité 11' encadrant une partie intermédiaire 12', cette dernière partie 12' formant un angle égal à 90 degrés avec chaque partie d'extrémité 11'. Par ailleurs, chaque partie d'extrémité comprend trois facettes 111', 112', 113', chacune desdites facettes comprenant une pluralité d'ondulations dans la direction de la hauteur de la lame. Combinées ensemble, les facettes et les ondulations permettent de réaliser un blocage mécanique des parois de l'incision moulée avec une telle lame. Pour satisfaire aux conditions essentielles de l'invention, la partie intermédiaire est totalement dépourvue de tout moyen de blocage. Dans une variante, non montrée, on peut prévoir d'augmenter légèrement l'épaisseur de cette partie intermédiaire de manière à améliorer encore le découplage entre les faces opposées de l'incision moulée par cette partie.

Des tests de roulage dans des conditions reproduisant des roulages réels ont permis d'évaluer l'amélioration de la performance en usure apportée par des pneumatiques selon l'invention, en comparaison avec des pneumatiques de même dimension ne comportant qu'une pluralité d'incisions transversales sans aucun élément de blocage. L'amélioration de la performance en usure irrégulière a été quantifiée par la diminution très sensible du nombre de rotations des pneumatiques sur les véhicules de test. La rotation des pneumatiques sur un véhicule consiste à permuter les pneumatiques de l'essieu avant avec ceux de l'essieu arrière lorsque l'usure irrégulière apparue sur l'essieu avant atteint un seuil prédéterminé nécessitant une telle opération afin de régulariser l'usure. Pour les pneumatiques de référence, la rotation des pneumatiques sur un véhicule poids lourd est réalisée pour un kilométrage compris entre 50000 et 150000 km. Une majorité des pneumatiques selon l'invention n'ont pas nécessité de rotation avant 200000 km, certains pneus atteignant même une distance de 300000 km. L'impact de cette amélioration en usure irrégulière a également permis d'améliorer très sensiblement la durée de vie totale du pneumatique (mesurée par la distance totale parcourue avant usure complète du pneumatique nécessitant son remplacement). Le gain moyen en kilométrage sur l'ensemble des pneumatiques selon l'invention est de l'ordre de 30%.

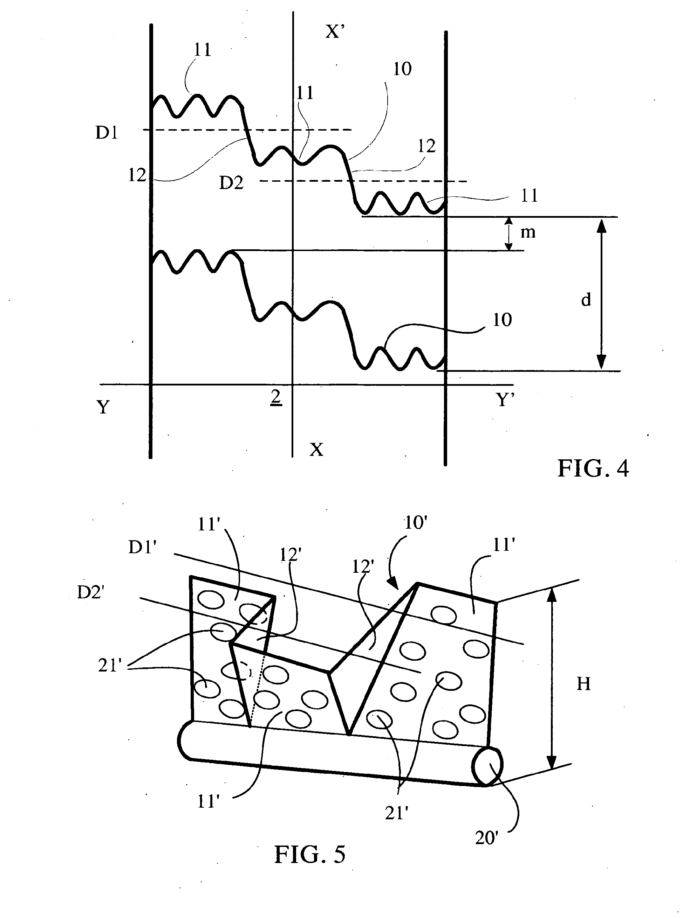

La figure 4 montre une vue partielle d'une bande de roulement d'une variante de sculpture selon l'invention. Une nervure 2 est représentée et comprend une pluralité d'incisions 10 traversant en totalité la nervure. Chaque incision comprend trois parties d'orientation générale transversale 11 séparées deux à deux par une partie 12 d'orientation sensiblement longitudinale (dans le cas présent ces parties 12 font un angle de 10° avec la direction longitudinale XX' de la nervure).

Les trois parties 11 sont étagées dans une même direction. Tous les points de la trace d'une première partie 11 sont situés d'un même côté par rapport à un plan perpendiculaire à la direction longitudinale (ayant pour trace une droite D1 parallèle à la direction transversale YY' de la nervure) , tandis que tous les points d'une autre partie 11 de la même incision sont situés de l'autre côté par rapport à ce même plan. Il en est de même de la troisième partie 11 qui se trouve entièrement d'un même côté par rapport à un plan perpendiculaire à la direction longitudinale (ayant pour trace une droite D2 parallèle à la direction transversale de la nervure) alors que tous les points des autres parties sont situés de l'autre côté par rapport à ce plan.

Par ailleurs, entre deux incisions il est avantageux qu'il n'y ait pas chevauchement, c'est-à-dire qu'il doit exister un espace de dimension non nul dans la direction longitudinale entre les points les plus proches entre lesdites incisions (cette distance est notée "m" sur la figure 4).

Préférentiellement la longueur circonférentielle de chaque partie d'incision d'orientation générale longitudinale est comprise entre 15% et 35% du pas de la sculpture, le pas de la sculpture étant défini comme la distance moyenne d séparant deux incisions successives.

Dans une autre variante d'incisions selon l'invention, on peut prévoir que les parties d'orientation générale transversale sont pourvues d'une pluralité de reliefs en saillie sur une face et en creux sur la face en vis-à-vis, les creux coopérant avec les saillies pour réaliser un blocage des mouvements relatifs desdites faces.

Un tel exemple est montré avec la figure 5 sur laquelle on voit une lame permettant de mouler une incision dans une bande de roulement.

Selon cette figure 5, une lame 10' pour le moulage d'une incision comprend deux parties 12' d'orientation longitudinale dépourvues de moyen de blocage des mouvements relatifs des faces de l'incision en vis-à-vis, tandis que les trois autres faces 11' d'orientation générale transversale sont pourvues d'une pluralité de protubérances 21'. Ces parties de lame sont destinées à mouler des creux et des bosses sur les parois de l'incision de manière à ce que les bosses d'une paroi interagissent avec les creux de la paroi opposée. Par ailleurs, l'une des extrémités de la lame est formée d'un renflement 20' sensiblement rectiligne et de section transversale circulaire pour mouler en fond d'incision un canal.

Les parties 11' sont dans le cas présent disposées de manière décalées les unes par rapport aux autres (les traces D1' et D2' correspondent à des plans radiaux contenant le renflement 20'.

Comme variante, il est possible de prévoir que l'orientation moyenne des incisions, c'est-à-dire l'orientation que fait une direction passant par les extrémités de chaque incision est au plus égale à 10°.

L'invention n'est pas limitée aux exemples décrits et représentés et diverses modifications peuvent y être apportées sans sortir de son cadre. En particulier, il est possible d'incliner les incisions de manière à ce que chaque incision fasse un angle différent de 0° avec un plan radial, c'est-à-dire un plan contenant l'axe de rotation.

En particulier, ce qui a été décrit concerne les bandes de roulement pouvant faire l'objet d'une distribution commerciale spécifique ou encore des pneumatiques ayant de telles bandes de roulement, ces pneumatiques étant destinés à être commercialisés individuellement ou bien sous la forme d'équipement de véhicule poids lourd.

## Revendications

1. Bande de roulement (1) pour pneumatique comprenant au moins une nervure longitudinale (2) délimitée par des rainures (3) ayant même orientation, chaque nervure comprenant une pluralité d'incisions (10) d'orientation essentiellement transversale et débouchant dans les rainures délimitant ladite nervure, sur chaque nervure chaque incision est délimitée par des faces de matière se faisant face et comprend au moins trois parties, deux au moins de ces parties (11) sont d'orientation essentiellement transversale (c'est-à-dire orientées selon un angle au moins égal à 60° avec la direction longitudinale de la bande) et débouchant dans les rainures (3) délimitant la nervure longitudinale et forment les parties d'extrémité de l'incision (10), au moins une autre partie (12) étant orientée essentiellement dans la direction longitudinale (c'est-à-dire dont la trace sur la surface de roulement fait un angle moyen au plus égal à 10° avec la direction longitudinale),
■ toutes les parties de l'incision d'orientation essentiellement longitudinale (12) étant dépourvues de tout moyen de blocage des faces les délimitant, que ce soit dans la direction de l'épaisseur de la bande ou dans une direction transversale à l'épaisseur de la bande,
■ chaque partie d'orientation générale transversale (11) étant en totalité décalée dans le sens longitudinal de toute autre partie d'orientation transversale de la même incision, cette bande étant **caractérisée en ce que** les parties (11) d'orientation essentiellement transversale comprennent sur les faces de matière qui les délimitent des moyens pour limiter l'amplitude des mouvements d'une de ces faces par rapport à l'autre au moins dans la direction de l'épaisseur de la bande.

2. Bande de roulement (1) pour pneumatique selon la revendication 1 **caractérisée en ce que** au moins certaines des parties d'incisions d'orientation essentiellement transversale (11) sont en outre pourvues de moyens pour limiter les mouvements relatifs dans la direction transversale des faces en vis-à-vis délimitant l'incision.

3. Bande de roulement (1) pour pneumatique selon la revendication 1 **caractérisée en ce que** les moyens pour limiter l'amplitude des mouvements d'une de ces faces par rapport à l'autre dans la direction de l'épaisseur de la bande sont composés d'au moins une ondulation dans la direction de l'épaisseur.

4. Bande de roulement pour pneumatique selon l'une quelconque des revendications 1 à 3 **caractérisée en ce qu'**au moins les faces en vis-à-vis délimitant une incision sont pourvues d'au moins un relief sur lesdites faces, ces reliefs étant destinés à coopérer entre eux pour limiter les mouvements relatifs entre les deux faces.

5. Bande de roulement pour pneumatique selon l'une quelconque des revendications 1 à 4 **caractérisée en ce que** la distance minimale entre deux portions d'incision d'orientation essentiellement transversale est comprise entre 15% et 35% du pas de sculpture, le pas de sculpture étant défini comme la distance moyenne séparant deux incisions successives.

6. Bande de roulement pour pneumatique selon l'une quelconque des revendications 1 à 5 **caractérisée en ce que** l'orientation des parties sans limitation des mouvements entre les faces délimitant lesdites parties est égale à 0°.

7. Bande de roulement pour pneumatique selon l'une quelconque des revendications 1 à 6 **caractérisée en ce que** l'orientation moyenne des incisions, c'est-à-dire l'orientation que fait une direction passant par les extrémités de chaque incision est au plus égale à 10°.

8. Bande de roulement pour pneumatique selon l'une quelconque des revendications 1 à 7 **caractérisée en ce que** les parties d'orientation transversale (11) sont situées en totalité en dehors du volume délimité par deux plans P' et P'' parallèles à la direction axiale de la bande de roulement et perpendiculaires à la surface externe de la bande de roulement, ces plans passant respectivement par les extrémités longitudinalement les plus éloignées de la partie d'orientation essentiellement longitudinale (12).

9. Pneumatique pourvu d'une bande de roulement selon l'une quelconque des revendications 1 à 8 destiné à équiper un véhicule poids lourd.

## Claims

1. A tyre tread (1) comprising at least one longitudinal rib (2) limited by grooves (3) having the same orientation, each rib comprising a plurality of incisions (10) of essentially transverse orientation and opening into the grooves defining said rib, on each rib each incision is limited by faces of material which face one another and comprises at least three parts, two at least of these parts (11) being of essentially transverse orientation (that is to say oriented at an angle at least equal to 60° with the longitudinal direction of the tread) and opening into the grooves (3) defining the longitudinal rib and form the end parts of the incision (10), at least one other part (12) being oriented essentially in the longitudinal direction (that is to say the trace of which on the running surface forms an average angle at most equal to 10° with the longitudinal direction),
■ all the parts of the incision (12) of essentially longitudinal orientation being devoid of any means of blocking the faces defining them, be it in the direction of the thickness of the tread or in a direction transverse to the thickness of the tread,
■ each part of transverse general orientation (11) being entirely offset in the longitudinal direction from any other part of transverse orientation of the same incision,
this tread being **characterised in that:**
■ the parts (11) of essentially transverse orientation comprise on the faces of material which define them means for limiting the amplitude of the movements of one of these faces relative to the other at least in the direction of the thickness of the tread,

2. A tyre tread (1) according to Claim 1, **characterised in that** at least some of the incision parts of essentially transverse orientation (11) are furthermore provided with means for limiting the relative movements in the transverse direction of the facing faces defining the incision.

3. A tyre tread (1) according to Claim 1, **characterised in that** the means for limiting the amplitude of the movements of one of these faces relative to the other in the direction of the thickness of the tread are composed of at least one undulation in the direction of the thickness.

4. A tyre tread according to any one of Claims 1 to 3, **characterised in that** at least the facing faces defining a incision are provided with at least one relief element on said faces, these relief elements being intended to cooperate with each other to limit the relative movements between the two faces.

5. A tyre tread according to any one of Claims 1 to 4, **characterised in that** the minimum distance between two incision portions of essentially transverse orientation is between 15% and 35% of the tread pattern pitch, the tread pattern pitch being defined as the average distance between two successive incisions.

6. A tyre tread according to any one of Claims 1 to 5, **characterised in that** the orientation of the parts without limiting the movements between the faces defining said parts is equal to 0°.

7. A tyre tread according to any one of Claims 1 to 6, **characterised in that** the average orientation of the incisions, that is to say the orientation formed by a direction passing through the ends of each incision, is at most equal to 10°.

8. A tyre tread according to any one of Claims 1 to 7, **characterised in that** the parts of transverse orientation (11) are located entirely outside the volume defined by the two planes P' and P" parallel to the axial direction of the tread and perpendicular to the outer surface of the tread, these planes passing respectively through the ends longitudinally farthest from the part of essentially longitudinal orientation (12).

9. A tyre provided with a tread according to any one of Claims 1 to 8, intended to be fitted on a heavy vehicle.

## Patentansprüche

1. Lauffläche (1) für Luftreifen, die mindestens eine Längsrippe (2) enthält, welche von Rillen (3) gleicher Ausrichtung begrenzt wird, wobei jede Rippe mehrere Einschnitte (10) mit im Wesentlichen quer verlaufender Ausrichtung und in die die Rippe begrenzenden Rillen mündend enthält, wobei auf jeder Rippe jeder Einschnitt durch einander gegenüberliegende Materialseiten begrenzt wird und mindestens drei Bereiche enthält, wobei mindestens zwei dieser Bereiche (11) im Wesentlichen quer ausgerichtet sind (d.h. gemäß einem Winkel von mindestens 60° zur Längsrichtung der Lauffläche ausgerichtet) und in die die Längsrippe begrenzenden Rillen (3) münden und die Endbereiche des Einschnitts (10) bilden, wobei mindestens ein anderer Bereich (12) im Wesentlichen in Längsrichtung (d.h. dessen Verlauf auf der Lauffläche einen mittleren Winkel höchstens gleich 10° mit der Längsrichtung bildet) ausgerichtet ist,
• wobei alle Bereiche (12) des Einschnitts mit im Wesentlichen Längsausrichtung keinerlei Blockiereinrichtung der sie begrenzenden Seiten aufweisen, weder in Richtung der Dicke der Lauffläche noch in einer Richtung quer zur Dicke der Lauffläche,
• wobei jeder Bereich (11) mit allgemeiner Querausrichtung insgesamt in Längsrichtung zu jedem anderen Bereich mit Querausrichtung des gleichen Einschnitts versetzt ist,
wobei diese Lauffläche **dadurch gekennzeichnet ist, dass** die Bereiche (11) mit im Wesentlichen Querausrichtung auf den sie begrenzenden Materialseiten Einrichtungen enthalten, um die Amplitude der Bewegungen einer dieser Seiten bezüglich der anderen zumindest in Richtung der Dicke der Lauffläche zu begrenzen.

2. Lauffläche (1) für Luftreifen nach Anspruch 1, **dadurch gekennzeichnet, dass** mindestens bestimmte der Einschnittbereiche (11) mit im Wesentlichen Querausrichtung außerdem mit Einrichtungen versehen sind, um die relativen Bewegungen in Querrichtung der den Einschnitt begrenzenden, einander gegenüberliegenden Seiten zu begrenzen.

3. Lauffläche (1) für Luftreifen nach Anspruch 1, **dadurch gekennzeichnet, dass** die Einrichtungen zur Begrenzung der Amplitude der Bewegungen einer dieser Seiten bezüglich der anderen in Richtung der Dicke der Lauffläche aus mindestens einer Wellenform in Richtung der Dicke bestehen.

4. Lauffläche (1) für Luftreifen nach einem der Ansprüche 1 bis 3, **dadurch gekennzeichnet, dass** mindestens die einen Einschnitt begrenzenden, einander gegenüberliegenden Seiten mit mindestens einem Relief auf den Seiten versehen sind, wobei diese Reliefs dazu bestimmt sind, zusammenzuwirken, um die relativen Bewegungen zwischen den zwei Seiten zu begrenzen.

5. Lauffläche (1) für Luftreifen nach einem der Ansprüche 1 bis 4, **dadurch gekennzeichnet, dass** der Mindestabstand zwischen zwei Einschnittabschnitten mit im Wesentlichen Querausrichtung zwischen 15% und 35% der Profilteilung liegt, wobei die Profilteilung als der mittlere Abstand definiert wird, der zwei aufeinanderfolgende Einschnitte trennt.

6. Lauffläche (1) für Luftreifen nach einem der Ansprüche 1 bis 5, **dadurch gekennzeichnet, dass** die Ausrichtung der Bereiche ohne Begrenzung der Bewegungen zwischen den die Bereiche begrenzenden Seiten gleich 0° ist.

7. Lauffläche (1) für Luftreifen nach einem der Ansprüche 1 bis 6, **dadurch gekennzeichnet, dass** die mittlere Ausrichtung der Einschnitte, d.h. die Ausrichtung, die eine durch die Enden jedes Einschnitts verlaufende Richtung hat, höchstens gleich 10° ist.

8. Lauffläche (1) für Luftreifen nach einem der Ansprüche 1 bis 7, **dadurch gekennzeichnet, dass** die Bereiche mit Querausrichtung (11) sich insgesamt außerhalb des Volumens befinden, das von zwei Ebenen P' und P" parallel zur axialen Richtung der Lauffläche und lotrecht zur Außenfläche der Lauffläche begrenzt wird, wobei diese Ebenen durch die Enden verlaufen, die in Längsrichtung am weitesten vom Bereich mit im Wesentlichen Längsausrichtung (12) entfernt sind.

9. Luftreifen, der mit einer Lauffläche nach einem der Ansprüche 1 bis 8 ausgestattet und zur Ausrüstung eines Schwerlastwagens bestimmt ist.
